Europäisches Patentamt

European Patent Office

Office européen des brevets

Veröffentlichungsnummer: **0 302 527**
**A2**

# EUROPÄISCHE PATENTANMELDUNG

Anmeldenummer: 88112863.1

Anmeldetag: 07.08.88

Int. Cl.⁴ **C08J 7/06 , C08L 75/04**

Priorität: 07.08.87 CH 3041/87

Veröffentlichungstag der Anmeldung:
08.02.89 Patentblatt 89/06

Benannte Vertragsstaaten:
**AT BE CH DE ES FR GB GR IT LI LU NL SE**

Anmelder: **FOMAGISOMER KUNSTSTOFFE GMBH**
**Orber Strasse 6**
**D-6000 Frankfurt/Main 61(DE)**

Erfinder: **Berwanger, Magda**
**Ben Gurionring 42**
**D-6000 Frankfurt(DE)**
Erfinder: **Cazan, Brigitta**
**Ben Gurionring 42**
**D-6000 Frankfurt(DE)**

Vertreter: **Büchel, Kurt F., Dr.**
**Patentanwalt Dr. Kurt F. Büchel Bergstrasse 297**
**FL-9495 Triesen(LI)**

Formkörper aus Polyurethankunststoff mit Stabilisierungsmitteln, sowie Verfahren und Mittel zu seiner Herstellung.

Die Stabilisierung von Polyurethankunststoff-Formkörpern erfolgt durch Anreicherung des Stabilisierungsmittels in der Oberfläche. Dies geschieht durch Aufbringen des Stabilisierungsmittels auf die Formoberfläche vor dem Einbringen des Kunststoffes und/oder auf die Oberfläche des Formkörpers nach dem Entformen. Stabilisierungsmittel hiefür sind vorzugsweise Emulsionen, die etwa 0,5 bis 1,5 Gewichtsteile Stabilisator, 3-7 Gewichtsteile eines Lösungsmittels, insbesondere eines Fluorkohlenwasserstoffes, sowie 0,5 bis 1,5 Gewichtsteile eines Emulgators auf 100 Gewichtsteile Wasser enthalten.

EP 0 302 527 A2

## Formkörper aus Polyurethankunststoff mit Stabilisierungsmitteln, sowie Verfahren und Mittel zu seiner Herstellung

Die Erfindung bezieht sich auf die Stabilisierung von Formkörpern aus Polyurethankunststoff gegenüber UV-Strahlen,Licht und/oder Wärme.

Mit der Entwicklung der Kunststoffe ergab sich die Notwendigkeit, nach Mitteln und Wegen zu suchen, um die durch die Umgebungsparameter Luft, Licht und Wärme bedingten Schädigungen zu vermeiden oder zumindest zu verzögern. Dies lässt sich durch Zusatz von Antioxydantien, sowie von UV- und Lichtschutzmitteln erreichen, die dem jeweiligen Kunststoff angepasst sein müssen.

Es ist bekannt, dass aliphatische Polyurethane die beste und aromatische Polyurethane bezüglich der Vergilbung die geringste Lichtbeständigkeit aufweisen.

Die Bewitterungsbeständigkeit der Polyurethane ist stark abhängig von der Zusammensetzung der zu ihrer Herstellung verwendeten Rohstoffe und damit auch von ihrem Strukturaufbau (linear oder vernetzt).

Die Beständigkeit gegen fotochemischen Abbau der Polyurethane auf Basis von aromatischen Diisocyanaten nimmt in folgender Reihe ab:

Polyesterpolyurethane---> Polyätherpolyurethane--->

---> Polythioätherpolyurethane

Die Alterung der Polyurethane an der Atmosphäre ist ein sehr komplizierter Prozess, dessen Mechanismus noch nicht vollständig bekannt ist.

Die Vergilbungsneigung von Polyurethanen bei Bewitterung lässt sich durch UV-Absorber vom Benzophenon- oder Benzotriazoltyp wirksam unterdrücken. Zum Stabilisieren werden auch Zink-, Calcium-, Blei-, Kobalt-, Cadmium-, Eisen-III-Salze, Thioharnstoffderivate,Imidazole,Naphthyiimide etc.empfohlen. Alle PUR-Typen auf Basis von aromatischen Diisocyanaten sind anfällig gegen Abbau durch Bewitterung.

Unter Polyuretanrohstoffen sind im folgenden (Polyester- oder Polyäther-) Polyurethan-Polyol-Komponenten und Polyurethan-Isocyanat-Komponenten (Isocyanat-Prepolymere) zu verstehen. Das Endprodukt (Polyurethan-Integralschaumstoff) entsteht bei den Schuhherstellern im Spritz- oder Giessverfahren.

Die Polyol-Komponente entsteht aus einer Mischung aus Polyester- oder Polyätherpolyolen, Kettenverlängerern (Diolen), Katalysatoren, Stabilisatoren, Treibmitteln (Wasser), Farbpasten, etc.

Die Rezepturen unterscheiden sich je nach gewünschter Dichte, Härte, bzw. anderen Eigenschaften.

Beispiele für die Verwendung der Schaumstoffe in der Schuhindustrie:

### Sportschuhe

einfarbige Sohlen     Dichte 0,60 g/cm3
zweifarbige Sohlen
(Sohlen mit unterschiedlichen Dichten)
- Laufsohle     Dichte 0,80-1,0 g/cm3
- Komfortteil     Dichte 0,40-0,45 g/cm3

### Strassenschuhe

einfarbige Sohlen     Dichte 0,55-0,60 g/cm3

### Sicherheitsschuhe

einfarbige Sohlen     Dichte 0,65-0,70 g/cm3
zweifarbige Sohlen
- Laufsohle     Dichte 0,99-1,0 g/cm3
- Komfortteil     Dichte 0,45-0,50 g/cm3

Je nach Schuhmodell können einfarbige Sohlen oder das Komfortteil bei zweifarbigen Sohlen weiss eingefärbt sein. In diesen Fällen und auch bei hell eingefärbten Sohlen wird die Anforderung gestellt, dass die Materialien eine gute Lichtbeständigkeit aufweisen.

Die Polyurethan-Isocyanat-Komponente ist ein Diisocyanat-Prepolymer, für dessen Herstellung MDI (Diphenylmethandiisocyanat) und Polyester- oder Polyätherpolyole verwendet werden. Das aromatische Diisocyanat hat eine starken Einfluss auf die Lichtbeständigkeit der Polyurethane.

Insbesondere die weissen und hell eingefärbten Polyol-Komponenten werden gegen Luft-, Licht- und Wärmeeinwirkung stabilisiert, indem man der Mischung UV-Absorber und Antioxidantien zufügt.Die Stabilisatoren sind dann im Schaum enthalten.

Die dafür verwendeten Stabilisatoren sind z.B. für die UV-Absorption Tinuvin (R) und/oder als Antioxydans Irganox (R) (eingetragene Marken der Ciba-Geigy, Basel), wie etwa Tinuvin P, chemische Formel:
2-(2'-Hydroxi-5'-methylphenyl)-benzotriazol
Tinuvin 765 aus der Klasse der sterisch gehinderten Amine Irganox 245, chemische Formel:
Triäthylenglykol-bis-3-(3'-tert.butyl-4-hydroxi-5-methylphenyl)propionat

Eine Mischung von drei Stabilisatoren in verschiedenen Konzentrationen wird bei der Herstellung der Polyol-Komponente zugegeben.

Beispiel 1: (Stand der Technik)

Für die Herstellung einer weissen PU-Schaumsohle wird folgende Polyäther-Polyol-Komponente hergestellt und anschliessend im Verhältnis 101 zu 100 mit einem MDI-Prepolymer zu einem PU-Schaumkörper reagiert:

| | | |
|---|---|---|
| Butandiol-1,4 | 11,80 | |
| Propylan DP2770 | 84,14 | (ein Polyäther-Polyol der Fa. Lankro, Manchester) |
| Triäthanoldiamin | 0,31 | |
| Ko-Katalysatoren | 0.10 | (Polycat 41, Fomrez UL32) |
| Diäthylendiamin | 1,00 | |
| Dest. Wasser | 0,40 | |
| Farbpaste Weiss | 1,50 | |
| Stabilisatoren | 0,75 | (Tinuvine, Irganox) |
| | 100,00 Teile | |
| Polycat 41 ist ein tertiäres Amin der Firma Air Products, USA. | | |
| Fomrez UL32 ist eine Zinn-Verbindung der Firma Witco, USA. | | |

3

Beispiel 2: (Stand der Technik):

Analog wie nach Beispiel 1 wird eine Polyester-Polyol-Komponente hergestellt und im Verhältnis 115 zu 100 mit einem MDI-Prepolymer reagiert:

| | | |
|---|---|---|
| Butandiol 1,4 | 11,75 | |
| Estolan P 201 | 72,62 | ) (Polyester-Polyole der Fa. |
| Estolan P 179 | 8,56 | ) Lankro, Manchester) |
| Triäthylendiamin | 0,59 | |
| Polycat 41 | 0,04 | |
| Stabilisatoren | 1,15 | (Tinuvine, Irganox) |
| Dest. Wasser | 0,38 | |
| Silikonöl DC 193 | 0,25 | (der Fa. Dow Corning, USA) |
| Vinyzene BPS-2PG | 0,66 | (ein antimikrobieller Zusatz der Fa. Morton Thiokol, USA) |
| Farbpaste Weiss | 4,00 | |
| | 100,00 | Teile |

Darüber hinaus lässt auch mit den besten derzeit am Markt befindlichen Stabilisatoren der Schutz vor Vergilbung und Alterung, insbesondere bei weissen Mischungen, noch sehr zu wünschen übrig. Die Verbesserung der Bewitterungsbeständigkeit ist eine immer aktuelle Anforderung.

Die Erfindung hat sich daher die Aufgabe gestellt, einen Polyurethan-Kunststoff-Formkörper, gegebenenfalls auch Polyurethanschaumstoff zu schaffen, der durch die verwendeten Stabilisierungsmittel keine Einbusse an Qualität erleidet und eine bessere Wärme-, Licht- und UV-Stabilisierung aufweist. Diese Aufgaben werden durch das Merkmal des Anspruches 1 erstmals zufriedenstellend gelöst. In besonderen Fällen kann (wie dort erwähnt) auch der Kern des Formkörpers einen - wenn auch gegenüber dem üblichen gegebenenfalls stark reduzierten - Gehalt an Stabilisierungsmittel aufweisen.

Vorteilhafte Weiterbildungen der Erfindung sind in den Kennzeichen der Ansprüche 2 bis 6 beschrieben.

Ein Gehalt an Stabilisierungsmittel von wesentlich unter 0,01 g/cm3 Oberfläche führt sehr bald zu gleichen oder schlechteren Stabilisierungswerten wie der herkömmliche Zusatz zur Masse. Ein Gehalt von über 0,2 g/cm3 bringt keine merkliche Verbesserung der Stabilisierungswirkung mehr; bei wesentlicher Steigerung verschlechtern sich die mechanischen Eigenschaften der Oberfläche.

Für erfindungsgemässe Formkörper werden insbesondere gut lösliche Stabilisierungsmittel bevorzugt, wie z.B. eine neue Klasse von Stabilisatoren, die unter anderem auch für die Polyurethanindustrie entwickelt wurde, nämlich die Formamidine , z.B. Givsorb UV-2. (R) (eingetragene Marke der Givaudan, Genf); dieses ist sowohl ein UV-Absorber, ein Antioxidans, als auch ein Wärmestabilisator. Seine Produktbeschreibung (Gruppen Nr. 42.19), sowie der Inhalt des US Patentes 4.021.471 gelten hiemit als im Rahmen dieser Beschreibung geoffenbart.

Auch im Schaum eingebaut verleiht dieser Stabilisator eine bessere Lichtbeständigkeit im Vergleich zu den üblichen Stabilisatoren. Ein Nachteil dieses Stabilisators ist, dass er mit dem Kettenverlängerer (Diol) langsam reagiert und somit die Lagerbeständigkeit der fertigen Systeme negativ beeinflussen kann.

Man müsste daher auf 3-Komponenten-Systeme (Polyol-Komponente bestehend aus Polyesterpolyol und Stabilisator; Vernetzer-Komponente bestehend aus Katalysatoren, Kettenverlängerern und Treibmitteln; Isocyanat-Komponente ev. als Prepolymer) übergehen. Das aber wiederum ist teuer und aufwendig, und wird von Anwendern nicht gerne gesehen.

In einer Weiterführung der Erfindung wird daher zur Herstellung der erfindungsgemässen Formkörper ein Verfahren vorgeschlagen, wie es in den Merkmalen der Ansprüche 7 bis 9 beschrieben ist.

Es wurde nämlich erfindungsgemäss festgestellt, dass die Behandlung der Formoberfläche vor dem Einbringen des Polyurethankunststoffes und/oder (insbesondere!) die Behandlung der Oberfläche des Formkörpers nach dem Entformen vorzugsweise mit einer - insbesondere wässrigen - Emulsion erfolgt.

Dadurch können nicht nur die Anteile an Lösungsmittel (das aber immer noch als "Träger" für das Stabilisierungsmittel, wenn auch gegenbenfalls in geringeren Mengen, erforderlich ist) geringer gehalten werden. Es steigt damit nicht nur die Wirtschaftlichkeit, sondern auch - wofür der Grund bisher theoretisch nicht genau geklärt werden konnte - die Wirksamkeit.

Als Lösungsmittel kommen unter anderem Diäthylphthalat, 2-Aethoxyäthylacetat, 2-Methoxyäthylacetat, Petroleumbenzin, vorzugsweise aber Fluorkohlenwasserstoffe, insbesondere Trichlorfluormethan in Frage, welch letzteres die besten Ergebnisse bringt.

Das erfindungsgemässe Stabilisierungsmittel ist am besten nach den in Anspruch 10 beschriebenen Merkmalen aufgebaut.

Beispiel 3:

Die beiden Rezepturen aus den Beispielen 1 und 2 wurden ohne die jeweiligen Stabilisatoren angesetzt. Die daraus resultierenden PU-Formkörper wurden nun mit verschiedenen Lösungen von Stabilisierungsmitteln oberflächenbehandelt.

In allen Fällen wurden bessere Stabilitätsergebnisse erzielt, als die Muster nach den Beispielen 1 und 2 sie zeigten, und zwar unabhängig davon, ob es sich um Polyäther- oder Polyester-Polyurethane handelte; ob es sich um naturfarbige (auch solche wurden angesetzt !) oder weisse Mischungen handelte; ob die Behandlungslösungen 1, 2 oder 3 % Stabilisierungsmittel enthielten; ob die Behandlungsmittel auf die Oberfläche gestrichen, versprüht oder durch Tauchen (1 Minute lang, dann 10 Minuten Trocknen bei Raumtemperatur) aufgebracht wurden; ob es sich um Lösungen in Aceton, Methylenchlorid, Methanol, Aethanol oder Isopropanol gehandelt hatte; ob die Behandlung unmittelbar nach der Herstellung, Tage danach, oder sogar einen Monat nach der Herstellung vorgenommen wird.

Wie vermutet, hat die Tauchzeit bei kleiner Dichte (z.B. 0,4) keinen grossen Einfluss auf die Lichtstabilität der behandelten Proben; höchstens dringen die Stabilisierungsmittel tiefer ein und ergeben vielleicht eine besonders langzeitige Stabilisierung.

Je grösser aber die Dichte (z.B. 1,0) ist, desto deutlicher ergibt sich ein Unterschied (eine Verbesserung) in der Lichtbeständigkeit des Formkörpers, wenn die Tauchzeit erhöht wurde. Man darf annehmen, dass die Lösung des Stabilisierungsmittels längere Zeit zum Eindiffundieren braucht und weniger tief eindringt, so dass sich eine höhere Konzentration des Stabilisierungsmittels in der Oberfläche ergibt.

Die in den Beispielen 1 und 2 genannten Stabilisierungsmittel lassen sich nicht in allen Lösungsmitteln lösen. Die drei Stabilisierungsmittel im Verhältnis 2 zu 2 zu 1 sind allerdings in Aceton und Methylenchlorid löslich.

Gute Ergebnisse wurden erzielt, wenn 10 bis 12 ml einer Givsorb-Lösung in Trennmittel in die Form gesprüht und erst anschliessend der Formkörper darin hergestellt wurde. Das Trennmittel enthält Frigen, Spezialbenzin ohne aromatische Kohlenwasserstoffe, sowie Polysiloxane. Allerdings neigt die Oberfläche der Formkörper unter bestimmten Bedingungen dazu, matt zu werden.

Für die Messergebnisse typisch ist etwa folgende Bewertungstabelle, wobei die Proben einer Höhensonne-Bestrahlungs-Quarzlampe im Abstand von 40 cm drei Stunden lang ausgesetzt und anschliessend für ein Monat unter normalem Tageslicht abgelegt wurden:

|  | Beispiele 1 und 2 | Beispiel 3 | |
|---|---|---|---|
|  |  | Tinuvin/Irganox | Givsorb |
| nach 1h | leichte Vergilbung | fast keine Vergilbung | fast keine Vergilbung |
| " 2h | stärkere Vergilbung | etwas Vergilbung | leichte Vergilbung |
| " 3h | starke Vergilbung | geringfügig stärkere Vergilbung | unverändert gegenüber 2 h |
| " 1 Mon. | sehr starke Vergilbung | unverändert gegenüber 3 h | unverändert gegenüber 2 h |

Vergleichsprüfungen wurden auch dadurch gemacht, dass Proben während 3 Wochen dem natürlichen Licht ausgesetzt, bzw. im Wärmeschrank bei 70 Grad C über mehrere Tage gelagert wurden. Die positive Beeinflussung der Oberflächenbehandlung war in allen Fällen deutlich.

Die Haut der Integralschaumstoffe beträgt 0,50-0,60 mm und ist von der Formentemperatur abhängig. Der Stabilisator dringt in die Oberfläche ein und kann nicht abgewaschen werden. Auch nach mehreren Tagen Wasserlagerung haben oberflächenbehandelte Formkörper eine gute Lichtbeständigkeit.

Nur bei einer Entfernung der Haut verschlechtert sich die Lichtstabilität des Schaumes. Bestrahlt wird

5

dann nämlich offenporiger Schaum ohne Stabilisierungsmittel.

Aber auch die mechanischen Eigenschaften der nach Beispiel 3 behandelten Polyurethan-Formkörper, wie Dauerbiegeverhalten, Reiss- und Zugfestigkeit, sowie Dehnung und Abrieb werden gegenüber denjenigen der nach Beispiel 1 und 2 hergestellten Formkörper nicht negativ beeinflusst; der Abrieb wird sogar geringfügig verbessert.

**Ansprüche**

1. Formkörper aus Polyurethankunststoff mit Stabilisierungsmitteln, dadurch gekennzeichnet, dass die Konzentration der Stabilisierungsmittel in der Oberflächenschicht grösser ist als im Kern des Formkörpers, vorzugweise die Stabilisierungsmittel ausschliesslich in einer Oberflächenschicht angeordnet sind.

2. Formkörper nach Anspruch 1, dadurch gekennzeichnet, dass die Oberflächenschicht höchstens 1 mm,vorzugsweise höchstens 0.6, insbesondere höchstens 0.3 mm dick ist, wobei die Konzentration der Stabilisierungsmittel von der Aussenfläche nach innen zu abnimmt.

3. Formkörper nach Anspruch 1 oder 2, dadurch gekennzeichnet, dass die Oberfläche die Haut eines Integralschaumstoffes ist.

4. Formkörper nach einem der vorhergehenden Ansprüche, dadurch gekennzeichnet, dass nur die im Gebrauch einer Bestrahlung durch Licht, Wärme und/oder ultraviolette Strahlung ausgesetzte Oberfläche Stabilisierungsmittel enthält.

5. Formkörper nach einem der vorhergehenden Ansprüche, dadurch gekennzeichnet, dass die Oberflächenschicht 0,01 bis 0,2 g, vorzugsweise 0,05 bis 0,1 g Stabilisierungsmittel pro 100 cm2 enthält.

6. Formkörper nach einem der vorhergehenden Ansprüche, dadurch gekennzeichnet, dass das Stabilisierungsmittel ein Formamidin-Derivat, vorzugsweise N-(p-äthoxycarbonylphenyl)-N'-äthyl-N'-phenylformamidin, ist.

7. Verfahren zur Herstellung des Formkörpers nach einem der vorhergehenden Ansprüche, dadurch gekennzeichnet, dass die Oberfläche der Form vor dem Einbringen der den Formkörper bilden den Kunststoffmischung in die Form und/oder die Oberfläche des - insbesondere von Stabilisierungsmittel freien - Polyurethan-Formkörpers nach dessen Entformung mit einer - vorzugsweise 1 bis 3 %igen - Lösung oder (insbesondere wässrigen) Emulsion des Stabilisierungsmittels behandelt wird, im Fall der Behandlung der Formoberfläche vorzugsweise in Kombination mit einem Trennmittel.

8. Verfahren nach Anspruch 7, dadurch gekennzeichnet, dass nur derjenige Teil der Formoberfläche - vorzugsweise durch Besprühen oder Bestreichen - mit der Lösung oder Emulsion behandelt wird, an dem der im späteren Gebrauch Licht, Wärme und/ oder einer ultravioletten Bestrahlung ausgesetzte Oberflächenteil des Formkörpers ausgebildet wird.

9. Verfahren nach Anspruch 7 oder 8, unter Verwendung einer wässrigen Emulsion, dadurch gekennzeichnet, dass die Emulsion wenigstens ein Lösungsmittel, insbesondere einen Fluorkohlenwasserstoff enthält.

10. Mittel für die Durchführung des Verfahrens nach einem der Ansprüche 7 bis 9, dadurch gekennzeichnet, dass es 0,3 bis 3, vorzugsweise 0,5 bis 1,5 Gewichtsteile Stabilisator; 1 bis 25, vorzugsweise 3 bis 7 Gewichtsteile eines Lösungsmittels, vorzugsweise eines Fluorkohlenwasserstoffs; sowie 0.3 bis 3, vorzugsweise 0,5 bis 1,5 Gewichtsteile eines Emulgators auf 100 Gewichtsteile Wasser enthält.